Europäisches Patentamt

European Patent Office

Office européen des brevets

(19)

(11) Veröffentlichungsnummer: **0 046 442**
**A1**

(12) **EUROPÄISCHE PATENTANMELDUNG**

(21) Anmeldenummer: **81810302.0**

(22) Anmeldetag: **24.07.81**

(51) Int. Cl.³: **A 01 C 3/02, C 02 F 3/28**

(30) Priorität: **18.08.80 AT 4203/80**

(43) Veröffentlichungstag der Anmeldung: **24.02.82**
**Patentblatt 82/8**

(84) Benannte Vertragsstaaten: **BE CH DE FR LI NL SE**

(71) Anmelder: **Frick, Alexander, Dipl.-Ing., Hof im grossen Riet, FL-9494 Schaan (LI)**

(72) Erfinder: **Frick, Alexander, Dipl.-Ing., Hof im grossen Riet, FL-9494 Schaan (LI)**

(74) Vertreter: **Werffeli, Heinz R., Dipl.-Ing., Postfach 245, CH-8032 Zürich (CH)**

(54) **Rundstall.**

(57) Der Rundstall besitzt eine kreisringförmige Umfangswand und ist unterkellert. Der Stallraum (7) und der Kellerraum (8) sind durch ein als Spaltenboden ausgebildeten Zwischenboden (6) unterteilt. Der Kellerraum (8) dient als Jaucheaufbereitungs- und Jauchelagerraum. Der Kellerraum (8) ist durch eine gegen die Mitte des Rundstalles hin trichterförmig geneigte Zwischendecke (15) in zwei Kammern unterteilt. Der innere Rand (16) der Zwischendecke (15) begrenzt mit dem Kellerboden (3) eine Öffnung (22). Diese Öffnung (22) ist mit einem Verschlußorgan wahlweise zu öffnen und zu schließen. Im oberen Teil des von der Zwischendecke (15) überspannten Bereiches ist eine nach außen führende Leitung (18) angeordnet. In dem von der Zwischendecke (15) überspannten Bereich wird die Jauche unter Abgabe von Methangas abgebaut. Das sich entwickelnde Gas sammelt sich unterhalb der Zwischendecke (15) an und kann über die Leitung (18) abgeführt werden. Über die Öffnung (22) wird die im Mittelbereich des Kellerraumes (8) anfallende frische Jauche dem von der Zwischendecke (15) überspannten Gärraum in periodischen Abständen zugeführt. Dadurch kann der Rundstall, der eine optimale Haltung der Tiere und eine Aufbereitung und Lagerung der Jauche ermöglicht, zusätzlich noch zur Energiegewinnung herangezogen werden.

Die Erfindung bezieht sich auf einen Rundstall mit kreisringförmiger Umfangswand und voller Unterkellerung, bei dem der zwischen Stallraum und Kellerraum liegende Zwischenboden mindestens teilweise als Spaltenboden ausgebildet ist, wobei der Kellerraum als Jaucheaufbereitungs- und -lagerraum dient und eine vorzugsweise mittig angeordnete Rühreinrichtung aufweist zur Einmischung des Fischdunges in die Jauche, und bei dem für den Stallraum oberhalb und den Kellerraum unterhalb des Zwischenbodens ein mindestens einen Ventilator aufweisendes Lüftungssystem vorgesehen ist.

Ein solcher Rundstall ist beispielsweise aus der DE-AS 24 39 251 bekannt. Die Erfindung zielt nun darauf ab, die in solchen Rundställen anfallende Jauche auch für die Biogasgewinnung heranzuziehen und die dafür notwendigen konstruktiven Maßnahmen so zu gestalten, daß sie in die Stallkonstruktion unmittelbar integrierbar sind. Zur Lösung dieser Aufgabe ist die Erfindung dadurch gekennzeichnet, daß außerhalb des vom Rührwerk überfahrenen vertikalen Bereiches des Kellerraumes eine kreisringförmige, vorzugsweise gegen die Mitte des Kellerraumes trichterartig geneigte Zwischendecke vorgesehen ist, deren innerer Rand mit dem Boden des Kellerraumes eine Öffnung begrenzt und deren äußerer Rand an der Innenwand des Kellerraumes anliegt und der von der Zwischendecke überspannte Raum mit einer nach außen führenden Leitung verbunden ist.

Dank dieser Maßnahme wird der durch den Spaltenboden herabfallende Harn und Kot gegen die Mitte des Kellerraumes geleitet und durch das hier befindliche Rührwerk, das auf der Jauche schwimmt, wird die Jauche wie bei solchen Rundställen bekannt, aufbereitet. Durch die erwähnte Zwischendecke wird nunmehr der Kellerraum in zwei nach

0046442

Art kommunizierender Gefäße verbundene Kammern unterteilt, wobei die ringförmige, die außenliegende Kammer als Gärraum und Gassammelraum dient, aus welchem das anfallende Gas über eine nach außen führende Leitung abgezogen werden kann. Auf Grund des Umstandes, daß der Kellerraum des Rundstalles im Erdreich eingebettet ist, zumindest zum überwiegenden Teil, und daß ferner seine Wände zweckmäßigerweise wärmeisoliert sind, und daß in solchen Kellerräumen erhebliche Jauchemassen gelagert sind, wird ohne zusätzliche Beheizung des Gärraumes eine im wesentlichen konstante Temperatur von 18 bis 22° C erreicht, die den Gärvorgang positiv beeinflußt. Durch die im wesentlichen spaltförmige Öffnung im Bodenbereich wird ständig frischer, durch das Rührwerk aufbereiteter Dung in den Gärraum eingebracht. Die große Jauchemasse, die die Konstanthaltung der Temperatur ohne besondere zusätzliche Maßnahmen gewährleistet, insbesondere ohne zusätzliche energieverzehrende Heizung - und ferner die gleichmäßige Zufuhr aufbereiteter Frischjauche führen zu einer sehr gleichmäßigen Gasentwicklung pro Zeiteinheit. Zur Entnahme der Jauche ist unter dem von der Zwischendecke überspannten Bereich eine Pumpe mit einer nach außen führenden Leitung angeordnet. In dieser Leitung ist zweckmäßigerweise ein Mehrwegventil eingebaut, so daß die geförderte Jauche durch die erwähnte Leitung entweder nach außen gefördert werden kann, oder innerhalb des Kellerraumes umpumpbar ist. Die Jauche bleibt so lange im Kellerraum liegen, bis sie auf einem Acker oder Wiese zur Düngung ausgeführt werden kann. Ein Umlagern der Jauche ist hier bei diesen Rundställen nicht erforderlich. Um zu verhindern, daß während des Betriebes des Stalles durch die Öffnung, die der innere Rand der Zwischendecke mit dem Boden des Kellerraumes begrenzt, Jauchemengen aus anaeroben und aeroben Bereichen ungewollt hin und her fließen, ist nach einem weiteren Merkmal der Erfindung vorgesehen, daß diese Öffnung zeitweise verschließbar ausgestattet ist. Zu diesem Zweck können Schieber oder Klappen verwendet werden. Auch die Verwendung eines ringförmigen Verschlußkörpers ist möglich, der zur Freigabe der Öffnung angehoben wird. Das Öffnen und Schliessen kann dabei in Abhängigkeit des Füllstandes in dem vom Rührwerk überstrichenen Mittelbereich erfolgen und/oder in Abhängigkeit des Gasdruckes, der in dem von der Zwischendecke begrenzten Raum herrscht.

Um bereits bestehende Stallanlagen dieser Art mit möglichst geringem Aufwand umzurüsten für die Gewinnung von Biogas, ist nach einem weiteren erfindungsgemäßen Merkmal vorgesehen, die Zwischendecke aus einer kreisringförmigen Folie aus einem im wesentlichen gasdichten Material zu fertigen. Unter Folie im Sinne dieser Erfindung wird hier und im folgenden eine flexible Membran verstanden mit hohen Festigkeitswerten und großer Widerstandsfähigkeit gegen aggressive Medien, die darüberhinaus gasdicht ist. Eine solche Folie kann trichterartig als Zwischendecke in bestehende Rundställe nachträglich eingespannt und eingebaut werden und zwar ohne besonderen großen finanziellen Aufwand. Diese membranartige, in sich flexible Folie hat aber auch darüberhinaus einen erheblichen technischen Vorteil gegenüber einer in sich steifen Zwischendecke. Die unterhalb der Zwischendecke liegende Jauche ist der unmittelbaren Einwirkung des Rührwerkes entzogen bzw. zumindest nicht mehr der vollen Einwirkung derselben ausgesetzt. Obgleich beim Betrieb solcher Rundstallanlagen aufgrund der Flüssigkeitsütterung in der Jauche nur Feststoffanteile in geringem Maß anfallen, ist nicht ganz auszuschließen, daß diese Festkörperbestandteile in der relativ ruhigstehenden Jauche unterhalb der Zwischendecke allmählich aufsteigen und eine wenn auch nur dünne Schwimmdecke bilden, die erfahrungsgemäß die Gasbildung behindert. Dank der Wahl einer Folie für die Zwischendecke werden die durch das Rührwerk hervorgerufenen turbulenten Strömungen und Bewegungen der Jauche im Mittelbereich des Kellerraumes direkt auf die Folie übertragen, die dadurch nach Art einer Membrane zu schwingen beginnt und diese Schwingungen auf die unter ihr befindliche Jauche überträgt, wobei dank dieser Bewegung die Schwimmdecke ständig durchnäßt und somit gasdurchlässig oder sogar überhaupt am Entstehen gehindert wird.

Aufgrund der oben geschilderten baulichen bedingten Umstände ist die Gasentwicklung im wesentlichen über die Zeit konstant. Der im Gassammelraum entstehende Gasdruck ist jedoch abhängig vom Ausmaß der jeweiligen Gasentnahme. Der ordnungsgemäße Betrieb von Gasbrennern und auch von Gasmotoren setzt aber ein Gasangebot von im wesentlichen konstantem Druck voraus, so daß das dem Gassammelraum entnommene Gas zweckmäßigerweise einem außenliegenden Gasometer zugeführt werden sollte, um ein Gasangebot mit konstantem Druck zur Verfügung zu haben.

Um diesen zusätzlichen Aufwand einsparen zu können, ist nach einem weiteren Merkmal der Erfindung vorgesehen, daß der äußere Durchmesser der in die Ebene ausgebreiteten Folie größer ist als der Innendurchmesser des Kellerraumes und mindestens einer der Ränder der Folie mit einem Ballast verbunden ist und die Folie vorzugsweise in ihrem Mittelbereich eine mit einer nach außen führenden Leitung verbundene Öffnung aufweist, wobei der vorzugsweise als Ring ausgebildete Ballast am äußeren Rand der Folie vorgesehen ist und die Folie mit ihrem inneren, ortsfest, beispielsweise an vertikalen Säulen für die Stützung des Zwischenbodens angeordnete Randbereich mit dem Boden des Kellerraumes eine zeitweise verschließbare Öffnung begrenzt

oder aber, daß der vorzugsweise als Ring gebildete Ballast am inneren Rand der Folie vorgesehen und an vertikalen Stützen höhenverstellbar geführt ist und der äußere Rand der Folie an der Wand des Kellerraumes vorzugsweise am unteren Bereich desselben befestigt ist. Dank dieser Maßnahme dient die membranartige Folie nicht nur als raumtrennendes und raumbildendes Element, sie wirkt darüberhinaus zusätzlich als Gasometer zur Aufrechterhaltung eines im wesentlichen konstanten Gasdruckes unabhängig von der jeweiligen Gasentnahme und zwar unmittelbar in jenem Bereich, in dem das Gas anfällt und entsteht. Die Größe des Gasdruckes ist dabei abhängig vom Ausmaß des Ballastes. Für die Bildung dieses Ballastes kann beispielsweise der Rand der Folie gesäumt werden und in den durch den Saum gebildeten Hohlraum kann Sand eingebracht werden. Um den Durchmesser der Ränder konstant zu halten, wird in diesen Saum ein Ring eingelegt oder durch den Saum eingefaßt. Der Ballast kann aber auch durch einzeln angebrachte Gewichtselemente am Rand der Folie gebildet werden.

Wird der Ballast am äußeren Rand der Folie angeordnet, so wird er durch die Wand des Kellerraumes vertikal geführt, ein zeitliches Ausweichen ist praktisch ausgeschlossen. Ist der Saum am inneren Rand vorgesehen, so sind Führungselemente für seine ordnungsgemäße vertikale Führung zweckmäßig, wozu die bauseitig vorgesehenen Säulen oder Stützen für den Zwischenboden verwendet werden können.

Ist der Ballast am inneren Rand der Folie vorgesehen, so ist nach einem weiteren Merkmal der Erfindung dieser Ballast mit nach unten gerichteten Füßen oder Stützen ausgestattet, welche die Höhe des vom Folienrand und Kellerboden begrenzten Spalt bestimmen, wenn der Ballast seine tiefstmögliche Lage im Kellerraum eingenommen hat. Somit ist die spaltförmige Öffnung für die kommunizierende Verbindung der beiden Räume auch dann gewährleistet, wenn beim Anfahren des Stalles der Ballast ganz abgesunken ist, da nur wenig Jauche in diesem Falle im Kellerraum vorrätig ist. In all den geschilderten Fällen ist im Mittelbereich der Folie zumindest eine Öffnung vorgesehen, mit welcher eine elastische Leitung verbunden ist, die zweckmäßigerweise auch in ihrer Länge dehnbar ist und die nach außen zum Gasverbraucher führt.

Um zu gewährleisten, daß der ganze durch den Zwischenboden des Rundstalles fallende Kot und Harn dem zentralen, vom Rührwerk überstrichenen Bereich für die Aufbereitung der Jauche zugeführt wird, liegt ein weiteres erfindungsgemäßes Merkmal darin, daß unterhalb des Zwischenbodens und oberhalb der als Zwischendecke dienenden Folie eine gegen die Mitte des Kellerraumes hin geneigte, trichterartig angeordnete Wand vorgesehen ist, die zweckmäßigerweise ebenfalls aus einer Folie gebildet wird. Der einschlägige Fachmann hat die Möglichkeit, die hier aufgezeigten Merkmale im Rahmen der Erfindung auch zu kombinieren.

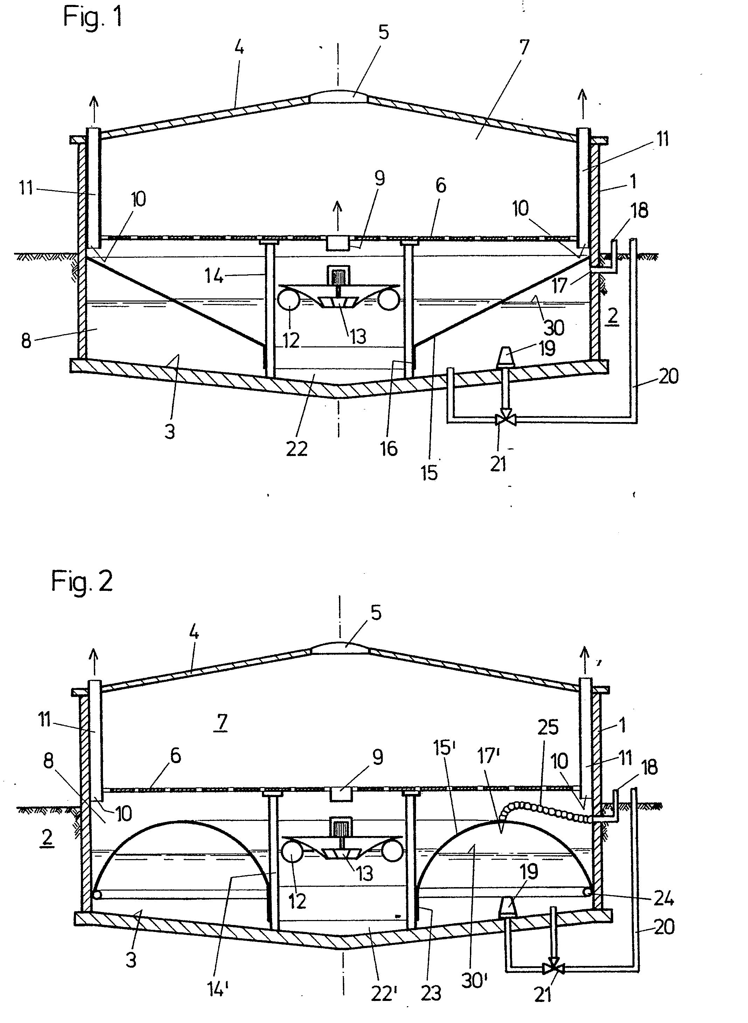

Die Zeichnung veranschaulicht die Erfindung, wobei die Fig. 1 bis 5 Vertikalschnitte durch Rundställe zeigen, wobei in jeder Figur verschiedene konstruktive Maßnahmen veranschaulicht sind, die für die Gewinnung von Biogas dienen. Das Rundstallgebäude selbst ist in allen Fällen gleich, aus welchem Grund in allen Figuren gleiche Teile mit gleichen Hinweisziffern ausgestattet wurden.

Der Rundstall (Fig. 1) mit einem Außendurchmesser beispielsweise von ca. 15 bis 20 m besteht einem stehenden zylindrischen Rohr 1 aus monolithischem Mauerwerk (Gußbeton), der mit einem erheblichen Teil seines unteren Bereiches im Erdreich 2 eingelassen ist. Ein trichterförmig geneigter Boden 3 schließt dieses Rohr nach unten ab. Nach oben ist das zylindrische Rohr 1 durch ein Kegeldach 4, hier mit einer zentralen Lichtkuppel 5 abgeschlossen. In der Höhe ist der Innenraum dieses monolithischen Zylinders, der auch hier nicht dargestellte Fenstern und Türen besitzen kann, durch den als Spaltenboden ausgebildeten Zwischenboden 6 in einen oberen Raum 7 und in einen Kellerraum 8 unterteilt. Im Raum 7 sind die Tiere. Boxen, Futtertröge, Abgrenzungen, Futterleitungen und dgl. mehr sind hier nicht dargestellt, weil ihre Ausgestaltung und Anordnung für die Erfindung nicht unmittelbar wesentlich sind. Der obere Teil des Stalles, also der oberhalb des Zwischenbodens 6 liegende Bereich kann auch kuppelförmig ausgestaltet sein, Zentral ist eine Frischluftöffnung 9 angeordnet. Absaugöffnungen 10 liegen unterhalb des Zwischenbodens 6 und führen zu Entlüftungsrohren 11. Nicht dargestellte Ventilatoren bewirken einen Zwangsumlauf der Luft. Unterhalb des Zwischenbodens 6 ist auf einem Schwimmträger 12 ein Rührwerk 13 gelagert, dessen Flügel in die Jauche eintauchen. An vertikalen Säulen 14, beispielsweise bauseitig vorgesehene Stützen für den Zwischenboden 6 ist das auf der Jauche schwimmende Rührwerk geführt. Die Art und Weise, wie solche Rundställe betrieben werden und welche Vorteile diese Konstruktion bietet, ist beispielsweise der deutschen Auslegeschrift 24 39 251 im einzelnen zu ententnehmen. Um diese Rundställe nun auch für die Gewinnung von Biogas heranzuziehen, ist außerhalb des vom Rührwerk 13 überfahrenen vertikalen Bereich des Kellerraumes eine kreisringförmige, hier trichterartig gegen die Mitte des Kellerraumes geneigte Zwischendecke 15 vorgesehen, deren innerer Rand 16 mit dem Boden 3 eine hier spaltförmige Öffnung 22 begrenzt, so daß hier im Kellerraum 8 zwei nach Art kommunizierender Gefäße verbundene Kammern entstehen, wobei die von der Zwischendecke 15 überspannte Kammer als Gärraum und Gassammelraum dient. Der äußere Rand der Zwischendecke 15 liegt hier dicht an der Innenwand des Kellerraumes an. Unmittelbar unterhalb der Zwischendecke 15 ist eine Öffnung 17 in der Wand vorgesehen, an welcher eine nach außen führende Rohrleitung 18 für die Entnahme des Biogases angeschlossen ist. Durch hier der Übersichtlichkeit wegen nicht gezeigte Mittel ist diese Öffnung 22 zeitweise verschließbar. Dies kann beispielsweise mit einem ringförmigen Verschlußkörper geschehen, der auf dem Boden 3 aufliegt und so hoch ausgestattet ist, daß er diese Öffnung verschließt und der zur Freigabe dieser Öffnung angehoben wird.

In diesem Gär- und Gassammelraum ist auch mindestens eine Pumpe 19 installiert mit einer nach außen führenden Leitung 20, durch welche die ausgegorene Jauche abgepumpt werden kann. Die Jauche wird dann abgepumpt, wenn sie als hochwertiger Dünger auf das Feld oder den Acker geführt wird. Bis zu diesem Ausbringen als Dünger verbleibt die Jauche in diesem Kellerraum. In der Leitung 20 wird zweckmäßigerweise ein Mehrwegventil 21 vorgesehen, über welches bei entsprechender Ventilstellung die Jauche im Kellerraum umgepumpt werden kann.

Die Funktionsweise ergibt sich aus der Darstellung nach Fig. 1: Über die ganze Ausdehnung des Zwischenbodens 6 rinnt ständig Kot und Urin nach unten. Diese herabfallenden Ausscheidungen werden vom Kellerraum aufgenommen, wobei das Rührwerk 13, das intermittierend betrieben wird, dafür sorgt, daß Luftsauerstoff für den Abbau der Jauche eingebracht wird. Durch den geöffneten Spalt 22 rinnt Jauche in den von der Zwischendecke 15 überspannten Bereich. Ist dieser Raum gefüllt, so wird der Spalt 22 verschlossen und die Jauche beginnt dort auszugasen, wobei dieses Ausgasen sehr gleichmäßig vor sich geht, da aufgrund der großen Jauchemasse eine relativ konstante Temperatur eingehalten werden kann. Ist die Jauche in dem von der Zwischendecke 15 überdeckten Bereich ausgegoren, so hat sich in dem vom Rührwerk überstrichenen Mittelbereich frische Jauche angesammelt, welche aufgrund des hydrostatischen Druckunterschiedes nach dem Öffnen des Spaltes 22 in dem von der Zwischendecke 15 überspannten Bereich nachrinnt und nachströmt. Das ausgeschiedene Gas sammelt sich oberhalb des Flüssigkeitsniveau 30 und bildet allmählich ein Druckpolster, wobei der entstehende Druck eine Niveaudifferenz zwischen außen und innen bedingen kann, wie dies aus der Fig. 1 ersichtlich ist, wenn der Verschluß des Spaltes 22 nicht ganz dicht sein sollte. Über die Öffnung 17 wird das hier gesammelte Gas abgezogen.

Die Zwischendecke 15 kann aus einem in sich steifen Material gebildet sein. Zweckmäßigerweise wird jedoch aus Kostengründen eine Folie verwendet aus gasdichtem Material mit geeigneten Festigkeitswerten und von geeigneter Beständigkeit, mit welcher bestehende Rundställe nachträglich ausgestattet werden können. Außer dem Kostenvorteil bringt eine solche nach Art einer Membran wirkende Folie auch einen erheblichen betriebstechnischen Vorteil. Wenngleich in solchen Rundställen im wesentlichen nur Flüssigkeitsfutter an die Tiere verabreicht wird, fallen in der Jauche doch Festkörpersubstanzen an, die in der unterhalb der Zwischendecke 15 relativ ruhig stehenden Flüssigkeit hochsteigen und eine Schwimmdecke bilden können. Da aber für die Zwischendecke 15 erfindungsgemäß eine Folie verwendet wird, werden die Turbulenzen und Bewegungen der Jauche im Kellerraum, die unmittelbar durch das laufende Rührwerk verursacht werden, auf diese als Membran wirkende Folie übertragen, die zu schwingen beginnt und diese Bewegungen auf die unter ihr befindliche Jauche überträgt, so daß diese ebenfalls in Bewegung gerät, wodurch die Entstehung einer Schwimmdecke überhaupt verhindert wird oder eine eventuell sich bildende Schwimmdecke ständig durchnäßt wird.

Fig. 2 zeigt nun eine Ausführungsvariante. Hier ist als Zwischendecke 15' ebenfalls eine Folie verwendet worden und zwar von kreisringförmiger Gestalt, wobei der Außendurchmesser der in die Ebene ausgebreiteten Folie erheblich größer ist als der Durchmesser des Kellerraumes. Der äußere Rand 24 der Folie 15' ist gesäumt und der durch diese Säumung bildete Hohlraum hier mit Sand gefüllt. Der innere Randbereich 23 der Folie 15' ist an den vertikalen Stützen befestigt unter Bildung eines bodennahen, mittels eines Verschlusses zu schließenden oder zu öffnenden Spaltes 22'. In der mittleren Zone dieser Folie ist mindestens eine Öffnung 17' angebracht, an welcher ein elastischer, vorzugsweise in seiner Länge dehnbarer Schlauch 25 angeschlossen ist, der nach außen führt und über welchen das entstehende Gas zum Gasverbraucher geleitet wird. Eine dermaßen angeordnete Folie 15' dient nicht nur als Element zur Raumtrennung und Raumbildung, sondern auch als Gasometer. Das Gas, das aus der unterhalb der Folie 15' befindlichen Jauche aufsteigt, sammelt sich oberhalb des Jaucheniveaus 30' und wölbt allmählich die Folie nach oben, wobei das Ausmaß des Gegendruckes durch die Bemessung des Ballastes wählbar ist. Je mehr Gas sich entwickelt, um so höher wird die Folie nach oben gezogen. Der äußere Rand 24 schleift dabei an der Wand des Kellerraumes. Da aber dieser Rand in der Jauche liegt, ist diese Bewegung sozusagen flüssigkeitsgeschmiert.

Dank dieser Konstruktion bedarf es keines zusätzlichen Gasometers. Auch diese Konstruktion ist bei bestehenden Anlagen nachträglich einzubauen. Die einzige bauliche Änderung, derer es bedarf, ist das Loch, durch welches die Gasleitung 18 nach außen geführt werden kann. Da die Folie erhebliche Bewegungen ausführt, ist zwischen Folie 15' und der bauseitigen Öffnung zur Führung der Gasleitung ein elastischer, in seiner Länge veränderbarer Schlauch angeordnet, der diese Bewegung zuläßt.

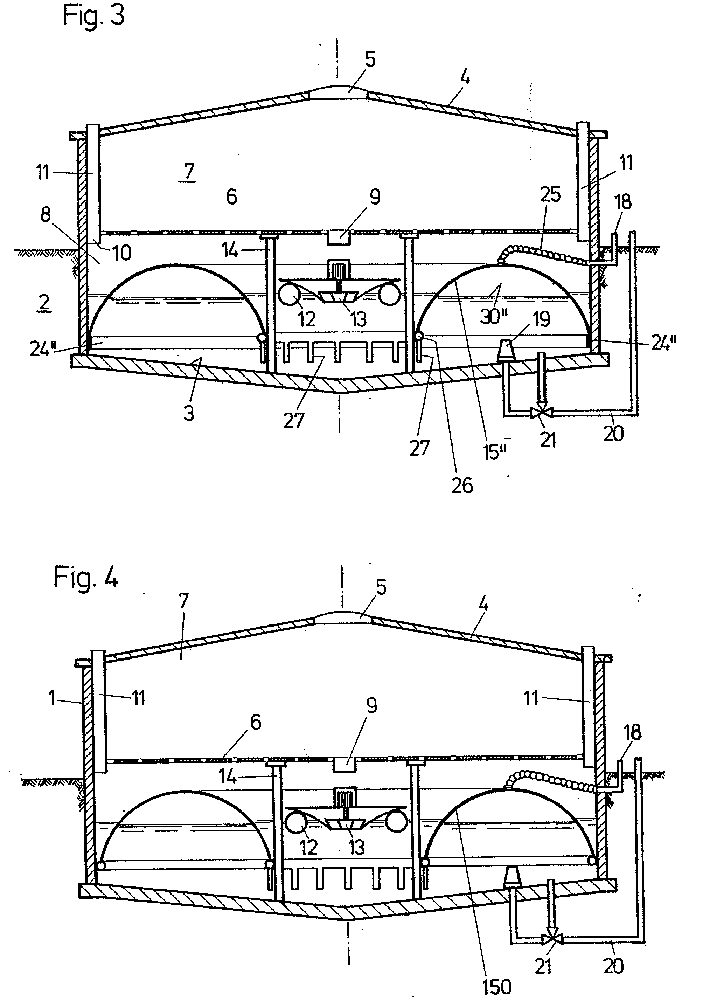

Die Ausführungsform nach Fig. 3 stellt sozusagen eine Umkehrung der vorstehend im Zusammenhang mit Fig. 2 gezeigten Ausführung dar.. Der äußere Rand 24" der Folie 15" ist hier fest und gasdicht mit der Wand des Kellerraumes in halber Höhe derselben verbunden. Der innere Rand trägt den Ballast 26. Zusätzlich sind hier vertikale Stützen 27 an diesen Rand der Folie vorgesehen, so daß beim Anfahren des Stalles, also wenn der Ballast 26 seine tiefste Lage einnimmt, die erforderlich Öffnung zur kommunizierenden Verbindung der beiden Kammern vorhanden ist. Bei dieser Konstruktion vergrößert sich dieser Spalt mit zunehmendem Gasvolumen, so daß hier keine Verschlußeinrichtung vorgesehen werden kann zum zeitweiligen Verschließen des Spaltes, so daß eine Anlage dieser Bauart nicht optimal arbeiten wird.

Beim Ausführungsbeispiel nach Fig. 4 sind sowohl der äußere wie auch der innere Rand mit einem Ballast ausgestattet und vertikal verstellbar, so daß die Folie 150 in ihrer Gesamtheit mit zunehmendem Gasvolumen und Jauchevolumen angehoben wird. Der innere Rand ist dabei so ausgebildet, wie dies im Zusammenhang mit Fig. 3 bereits erläutert wurde, wobei das oben gesagte bezüglich der Verschließbarkeit des Spaltes auch hier gilt.

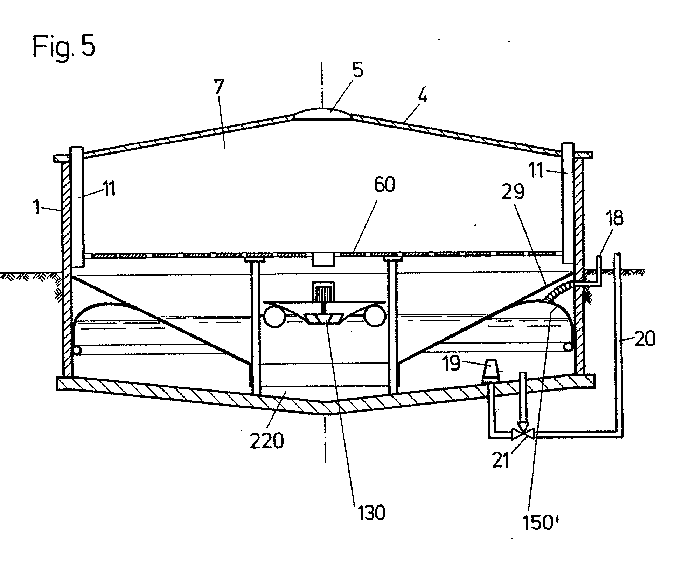

Um zu vermeiden, daß die mehr oder weniger gleichmäßig über die gesamte Ausdehnung des Zwischenbodens herabfallenden Ausscheidungen in den Zwickelräumen zwischen der Kellerwand und der angrenzenden Folienwölbung fallen und dort dem aufbereitend wirkenden Rührwerk mehr oder weniger entzogen werden, ist beim Ausführungsbeispiel nach Fig. 5 vorgesehen, daß zwischen Folie 150' und Zwischenboden 60 trichterartig eine zusätzliche Wand 29 eingezogen ist, die ebenfalls zweckmäßigerweise aus einer Folie besteht. Der äußere Rand der Folie 150' ist hier mit einem Ballast ausgestattet und höhenverstellbar, der innere Rand begrenzt den zeitweilig verschließbaren Durchlaßspalt 220 von vorgegebener Höhe für die kommunizierende Verbindung der beiden Kammern. Dank dieser Lösung fallen alle ankommenden Exkremente unmittelbar in den Wirkungsbereich des Rührwerkes 130.

Für den Verschluß des Durchlaßspaltes können, wie schon erwähnt, ringförmige Verschlußorgane vorgesehen werden, die heb- und senkbar sind. Es wäre auch möglich, auf den Boden des Kellerraumes Rohrstücke mit radial angeordneten Achsen im Mittelbereich vorzusehen und den inneren Rand der Zwischen-Decke über diese Rohrstücke zu ziehen, und in den Rohrstücken selbst oder an diesen Ventile oder Kalppen anzuordnen, so daß keine spaltförmige Öffnung vom inneren Rand der Zwischendecke begrenzt wird, sondern mehrere einzelne und nebeneinander angeordnete verschließbare Öffnungen.

In den gezeigten Ausführungsbeispiel ist im Gär- und Gassammelraum eine Pumpe 19 installiert. Anstelle einer solchen Pumpe kann in diesem Raum auch eine Saugleitung geführt werden, über welche mit einem herkömmlichen Saugdruckfaß die Jauche abgezogen werden kann. Um vor dem Absaugen der Jauche eventuell aufrühren zu können, kann ein Rührwerk in diesem Raum installiert sein, oder aber es kann seitlich in der Gebäudewand eine dicht verschließbare Öffnung vorgesehen werden, durch welche ein solches Rührwerk im Bedarfsfalle eingeschoben werden kann. Rührwerke dieser Art sind ja ebenfalls bekannt. Sie bestehen aus einem langgestreckten Gestänge, an dessen Unterseite ein Flügel angeordnet ist, am oberen Ende ist der Antriebsmotor für diesen Flügel gelagert. Dieses Gestänge einschließlich Flügel mit Motor ist nach Art einer Lafette auf einer Achse verfahrbar. Aber auch mit dem Saugdruckfaß kann die Jauche aufgerührt werden, in dem ein Teil der Jauche in das Saugdruckfaß gefördert wird und dann durch Umschalten der entsprechenden Leitungen diese im Saugdruckfaß befindliche Jauche wiederum in den Gär- und Gassammelraum mit hohem Druck zurückgepumpt wird. Der zurückfließende Jauchestrom wirbelt dann die in diesem Raum befindliche Jauche auf und bewirkt so ein Umrühren und Aufrühren.

810709

P a t e n t a n s p r ü c h e :

1. Rundstall mit kreisringförmiger Umfangswand und voller Unterkellerung, bei der zwischen Stallraum (7) und Kellerraum (8) liegende Zwischenboden (6) mindestens teilweise als Spaltenboden ausgebildet ist, wobei der Kellerraum als Jaucheaufbereitungs- und -lagerraum dient und eine vorzugsweise mittig angeordnete Rühreinrichtung (13) aufweist zur Einmischung des Frischdunges in die Jauche, und bei dem für den Stallraum oberhalb und den Kellerraum unterhalb des Zwischenbodens ein mindestens einen Ventilator aufweisendes Lüftungssystem vorgesehen ist, dadurch gekennzeichnet, daß außerhalb des vom Rührwerk (13, 130) überfahrenen vertikalen Bereiches des Kellerraumes (8) eine kreisringförmige, vorzugsweise gegen die Mitte des Kellerraumes trichterartig geneigte Zwischendecke (15, 15', 15", 150, 150') vorgesehen ist, deren innerer Rand (16) mit dem Boden (3) des Kellerraumes eine Öffnung (22, 22', 220) begrenzt und deren äußerer Rand an der Innenwand des Kellerraumes anliegt und der von der Zwischendecke überspannte Raum mit einer nach außen führenden Leitung (18) verbunden ist.

2. Rundstall nach Anspruch 1, dadurch gekennzeichnet, daß die Zwischendecke (15', 15", 150, 150') aus einer kreisringförmigen Folie aus im wesentlichen gasdichten Material besteht.

3. Rundstall nach Anspruch 2, dadurch gekennzeichnet, daß der äußere Durchmesser der in die Ebene ausgebreiteten Folie (15', 15", 150, 150') größer ist als der Innendurchmesser des Kellerraumes (8) und mindestens einer der Ränder (24) der Folie mit einem Ballast verbunden ist und die Folie vorzugsweise in ihrem Mittelbereich eine mit einer nach außen führenden Leitung (25) verbundene Öffnung (17') aufweist (Fig. 2, 3, 4, 5).

4. Rundstall nach Anspruch 2 oder 3, dadurch gekennzeichnet, daß der vorzugsweise als Ring ausgebildete Ballast am äußeren Rand (24) der Folie (15') vorgesehen ist und die Folie mit ihrem inneren Rand (23) ortsfest, beispielsweise an den Zwischenboden (6) ragenden vertikalen Säulen (14') angeordnet ist.

5. Rundstall nach Anspruch 2 oder 3, dadurch gekennzeichnet, daß der vorzugsweise als Ring ausgebildete Ballast (26) am inneren Rand der Folie (15") vorgesehen und an vertikalen Stützen (14) höhenverstellbar geführt ist und der äußere Rand (24") der Folie (15") an der Wand des Kellerraumes vorzugsweise am unteren Bereich derselben befestigt ist (Fig. 3).

6. Rundstall nach Anspruch 2, dadurch gekennzeichnet, daß die Folie (150) sowohl am inneren Rand wie auch am äußeren Rand einen vorzugsweise ringförmigen Ballast trägt (Fig. 4).

7. Rundstall nach Anspruch 5 oder 6, dadurch gekennzeichnet, daß der am inneren Rand angeordnete Ballast (26) nach unten gerichtete Fäuße oder Stützen (27) aufweist, welche die Höhe des vom Folienrand und Kellerboden begrenzten Spalt bestimmen, wenn der Ballast seine tiefstmögliche Lage im Kellerraum eingenommen hat (Fig. 3, 4).

8. Rundstall nach einem der Ansprüche 2 bis 7, dadurch gekennzeichnet, daß unterhalb des Zwischenbodens (60) und oberhalb der als Zwischendecke dienenden Folie (150') eine gegen die Mitte des Kellerraumes hingeneigte, trichterartig angeordnete Wand (29) vorgesehen ist (Fig. 5).

9. Rundstall nach Anspruch 1, dadurch gekennzeichnet, daß die trichterartig angeordnete Wand (29) ebenfalls aus einer Folie (150') gebildet ist (Fig. 5).

10. Rundstall nach einem der Ansprüche 1 bis 4, dadurch gekennzeichnet, daß die Öffnung (22, 22', 220) zeitweise verschließbar ist.

11. Rundstall nach Anspruch 10, dadurch gekennzeichnet, daß zum zeitweisen Verschließen der Öffnung (22, 22', 220) ein Schieber, eine Klappe oder ein ringförmiger Verschlußkörper vorgesehen ist und die Betätigung des Verschlußorganes in Abhängigkeit von der Höhe des Flüssigkeitsstandes in dem vom Rührwerk (13) überfahrenen Mittelbereich des Kellerraumes (8) und/oder von der Höhe des Gasdruckes unterhalb der Zwischendecke (15, 15', 15", 150, 150') erfolgt.

12. Rundstall nach einem der Ansprüche 1 bis 9, dadurch gekennzeichnet, daß in dem von der Zwischendecke überdeckten Bereich des Kellerraumes mindestens eine Pumpe (19) mit einer nach außen führenden Leitung (20) verbunden ist.

13. Rundstall nach Anspruch 10, dadurch gekennzeichnet, daß in der Leitung (20), vorzugsweise nahe der Pumpe (19) ein Mehrwegventil (21) vorgesehen ist, über welches je nach Stellung die Jauche nach außen leitbar oder innerhalb des Kellerraumes umpumpbar ist.

810708

Fig. 1

Fig. 2

0046442

1/3

HE 6727

Fig. 3

Fig. 4

Fig. 5

0046442

3/3

HE 6727

0046442

Nummer der Anmeldung

EP 81 81 0302.0

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D | DE – B2 – 2 439 251 (A. FRICK)<br>* Anspruch 1 *<br>-- | 1 | A 01 C    3/02<br>C 02 F    3/28 |
| | US – A – 4 208 279 (F.T. VARANI)<br>* Spalte 4, Zeilen 21 bis 54; Fig. 1, 3 *<br>-- | 1 | |
| | DE – A1 – 2 711 146 (F. WEBER)<br>* Seite 2, Zeilen 4 bis 11;<br>   Fig. 1, 2, 5 *<br>-- | 3,4 | RECHERCHIERTE SACHGEBIETE (Int. Cl.³) |
| | DE – C – 954 946 (J. WALTER)<br>* Seite 3, Zeile 91 bis Seite 4,<br>   Zeile 33; Fig. 1 bis 3 *<br>---- | 13 | A 01 C    3/00<br>A 01 K    1/00<br>C 02 F    3/28<br>C 12 M    1/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-10-1981 | SCHOFER |

EPA form 1503.1  06.78